(19) Europäisches Patentamt
European Patent Office
Office européen des brevets

(11) **EP 4 682 182 A1**

(12) **EUROPEAN PATENT APPLICATION**
published in accordance with Art. 153(4) EPC

(43) Date of publication:
**21.01.2026 Bulletin 2026/04**

(21) Application number: **24770645.0**

(22) Date of filing: **05.03.2024**

(51) International Patent Classification (IPC):
*C08F 255/00* (2006.01)       *C08F 8/46* (2006.01)
*C08L 23/26* (2025.01)       *C08L 51/06* (2006.01)
*C08L 77/00* (2006.01)

(52) Cooperative Patent Classification (CPC):
C08F 8/46; C08F 255/00; C08L 23/26; C08L 51/06;
C08L 77/00

(86) International application number:
**PCT/JP2024/008268**

(87) International publication number:
**WO 2024/190535 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.03.2023 JP 2023038891**

(71) Applicant: **Mitsui Chemicals, Inc.
Tokyo 104-0028 (JP)**

(72) Inventors:
• **NOZAKI, Shuhei**
  **Ichihara-shi, Chiba 299-0108 (JP)**
• **NAKAMURA, Tetsuya**
  **Ichihara-shi, Chiba 299-0108 (JP)**

(74) Representative: **Hoffmann Eitle
Patent- und Rechtsanwälte PartmbB
Arabellastraße 30
81925 München (DE)**

(54) **GRAFT-MODIFIED ETHYLENE/1-BUTENE COPOLYMER, POLYAMIDE RESIN COMPOSITION, AND MOLDED BODY**

(57)   One embodiment of the present invention provides a graft-modified ethylene/1-butene copolymer suitable as an impact modifier for an engineering plastic such as polyamide, and provides a polyamide resin composition excellent in balance between impact resistance of a shaped product and flowability of the polyamide resin composition, using the graft-modified ethylene/1-butene copolymer.

One embodiment of the present invention is a graft-modified ethylene/1-butene copolymer (A), obtained by graft-modifying an ethylene/1-butene copolymer (a) satisfying requirements (a-i) and (a-ii) with a polar compound. The requirements (a-i) and (a-ii) are described in the present description.

EP 4 682 182 A1

**Description**

Technical Field

One embodiment of the present invention relates to a graft-modified ethylene/1-butene copolymer, a polyamide resin composition comprising the graft-modified ethylene/1-butene copolymer, and use thereof.

Background Art

Polyamide resins have been widely used in the automotive field and electrical and electronic fields, taking advantage of their excellent properties as engineering plastics. Automotive components and electrical components used in these fields may be required to have impact resistance because of the necessity of its function. As a method for imparting impact resistance, a method for compounding a modified polyolefin resin with a polyamide resin has been known (Patent Literatures 1 and 2).

Polyamide resins are used, for example, in automotive components, and in recent years, they are strongly required to be lightweight to reduce their fuel consumption, resulting in requirements for being made thinner. However, in general, when made thinner, the impact resistance of a shaped product made of a polyamide resin decreases sharply.

Citation List

Patent Literature

[Patent Literature 1] JP5-32886A
[Patent Literature 2] JP-T-2021-503022A

Summary of Invention

Technical Problem

The modified polyolefin resins disclosed in Patent Literatures 1 and 2 are modified ethylene-propylene-based polymers. The present inventors have confirmed that polyamide resins containing the polymers cannot achieve both impact resistance of a shaped product containing the polyamide resin and flowability, i.e., it is difficult to improve the impact resistance of a shaped product without impairing the flowability of the polyamide resin, and they therefore have room for improvement. Then, an object of one embodiment of the present invention for solving the problem is to provide a graft-modified ethylene/1-butene copolymer suitable as an impact modifier for an engineering plastic such as polyamide, and to provide a polyamide resin composition excellent in balance between impact resistance of a shaped product and flowability, using the graft-modified ethylene/1-butene copolymer.

Solution to Problem

The present invention comprises the following aspects:

[1] A graft-modified ethylene/1-butene copolymer (A), obtained by graft-modifying an ethylene/1-butene copolymer (a) with a polar compound,
wherein the ethylene/1-butene copolymer (a) satisfies the following requirements (a-i) and (a-ii):
requirement (a-i): a ratio ($MFR_{10}/MFR_{2.16}$) of a melt flow rate ($MFR_{10}$) measured under conditions of 190°C and a load of 10 kg in accordance with ASTM D1238 to a melt flow rate ($MFR_{2.16}$) measured under conditions of 190°C and a load of 2.16 kg in accordance with ASTM D1238 is in the range of 6.7 to 9.0; and requirement (a-ii): a vinyl group content is in the range of 5.0 to 20.0 groups, and a total amount of unsaturated bonds is in the range of 40.0 to 200.0 bonds, per 100,000 carbon atoms as calculated by $^1$H-NMR.
[2] The graft-modified ethylene/1-butene copolymer (A) according to [1], wherein the polar compound is at least one selected from the group consisting of a hydroxyl group-containing ethylenically unsaturated compound, an amino group-containing ethylenically unsaturated compound, an epoxy group-containing ethylenically unsaturated compound, an aromatic vinyl compound, unsaturated carboxylic acid and a derivative thereof, a vinyl ester compound, and vinyl chloride.
[3] A graft-modified ethylene/1-butene copolymer (A), obtained by graft-modifying an ethylene/1-butene copolymer (a) with a polar compound,

wherein the graft-modified ethylene/1-butene copolymer (A) satisfies the following requirements (A-i) to (A-v): requirement (A-i): a ratio ($MFR_{10}/MFR_{2.16}$) of a melt flow rate ($MFR_{10}$) measured under conditions of 190°C and a load of 10 kg in accordance with ASTM D1238 to a melt flow rate ($MFR_{2.16}$) measured under conditions of 190°C and a load of 2.16 kg in accordance with ASTM D1238 is in the range of 11.5 to 18.0; requirement (A-ii): a vinyl group content is in the range of 5.0 to 20.0 groups, and a total amount of unsaturated bonds is in the range of 40.0 to 200.0 bonds, per 100,000 carbon atoms as calculated by $^1$H-NMR;

requirement (A-iii): an amount of graft modification is in the range of 0.1 to 2.0% by mass based on 100% by mass of the graft-modified ethylene/1-butene copolymer (A);

requirement (A-iv): a melt flow rate ($MFR_{2.16}$) measured in accordance with ASTM D1238 under conditions of 190°C and a load of 2.16 kg, is in the range of 0.01 to 5.00 g/10 min; and

requirement (A-v): a density measured in accordance with ASTM D1505 under condition of 25°C, is in the range of 850 to 885 kg/m$^3$.

[4] The graft-modified ethylene/1-butene copolymer (A) according to [3], wherein the polar compound is at least one selected from the group consisting of unsaturated carboxylic acid and a derivative thereof.

[5] A polyamide resin composition comprising 1 to 50 parts by mass of the graft-modified ethylene/1-butene copolymer (A) according to any one of [1] to [4] and 50 to 99 parts by mass of a polyamide resin (B), based on 100 parts by mass of a total of the graft-modified ethylene/1-butene copolymer (A) and the polyamide resin (B).

[6] The polyamide resin composition according to [5], wherein the polyamide resin (B) is one or more aliphatic polyamide resins selected from the group consisting of polyamide 6, polyamide 66, polyamide 11, polyamide 12, polyamide 612, polyamide 610 and polyamide 1010.

[7] A pellet comprising the polyamide resin composition according to [5] or [6].

[8] A shaped product comprising the polyamide resin composition according to [5] or [6].

[9] An injection molded article comprising the polyamide resin composition according to [5] or [6].

[10] An automotive component comprising the polyamide resin composition according to [5] or [6].

[11] An electronic component comprising the polyamide resin composition according to [5] or [6].

[12] An automotive electrical component comprising the polyamide resin composition according to [5] or [6].

Advantageous Effects of Invention

The graft-modified ethylene/1-butene copolymer (A) obtained in one embodiment of the present invention is suitable as an impact modifier while inhibiting a decrease in flowability of an engineering plastic such as polyamide.

Moreover, a polyamide resin composition comprising the graft-modified ethylene/1-butene copolymer (A) of one embodiment of the present invention has flowability suitable for producing a shaped product, and the obtained shaped product exhibits high impact resistance even when made thinner. Namely, the polyamide resin composition is excellent in balance between impact resistance of a shaped product and flowability.

Description of Embodiments

Hereinafter, specific embodiments of the present invention will be described in detail. However, the present invention is not limited in any way to the following embodiments but can be implemented with appropriate modifications within the intended scope of the present invention.

As used herein, the term "to" indicating a numerical range is used to mean that the numerical values before and after "to" are included as a lower limit value and an upper limit value, respectively.

As used herein, the term "to" indicating a numerical range means that even if the unit is specified before or after "to", both values have the same unit unless otherwise specified.

In the present description, a combination of two or more preferred aspects is a more preferred aspect. Moreover, in the present description, each component in a composition or each constituent unit in a polymer may be included singly or in combination of two or more thereof, unless otherwise specified.

In the present description, the content of each component in a composition or each constituent unit in a polymer refers to, in a case in which each component or a plurality of substances or constituent units corresponding to each constituent unit in the polymer is present in the composition, the total of the content of the corresponding substances present in the composition or the plurality of each constituent unit present in the polymer, unless otherwise specified.

<Ethylene/1-butene copolymer (a)>

An ethylene/1-butene copolymer (a) is used as a raw material for the graft-modified ethylene/1-butene copolymer (A) according to one embodiment of the present invention. The ethylene/1-butene copolymer (a) may be referred to as a component (a).

The ethylene/1-butene copolymer (a) usually satisfies the following requirements (a-i) and (a-ii).

[Requirement (a-i)]

A ratio ($MFR_{10}$/$MFR_{2.16}$) of a melt flow rate ($MFR_{10}$) measured under conditions of 190°C and a load of 10 kg in accordance with ASTM D1238 to a melt flow rate ($MFR_{2.16}$) measured under conditions of 190°C and a load of 2.16 kg in accordance with ASTM D1238 is in the range of 6.7 to 9.0.

The $MFR_{10}$/$MFR_{2.16}$ is preferably in the range of 6.8 to 8.9, more preferably 6.9 to 8.8, and still more preferably 7.0 to 8.7. When the $MFR_{10}$/$MFR_{2.16}$ of the ethylene-1-butene copolymer (a) falls within the above range, and the ethylene/1-butene copolymer (a) is graft-modified with a polar compound to produce a graft-modified ethylene/1-butene copolymer (A), the polyamide resin composition, obtained by blending the graft-modified copolymer (A) with a polyamide resin, exhibits excellent flowability, and a shaped product containing the composition exhibits excellent impact resistance.

[Requirement (a-ii)]

The vinyl group content is in the range of 5.0 to 20.0 groups, and the total amount of unsaturated bonds is in the range of 40.0 to 200.0 bonds, per 100,000 carbon atoms as calculated by $^1$H-NMR.

The vinyl group content is preferably in the range of 5.5 to 17.0 groups, more preferably 6.0 to 14.0 groups, and still more preferably 6.5 to 11.0 groups. The total amount of unsaturated bonds is preferably in the range of 45.0 to 190.0 bonds, more preferably 50.0 to 180.0 bonds, and still more preferably 55.0 to 170.0 bonds.

When the graft-modified ethylene/1-butene copolymer (A) produced by graft-modifying the ethylene/1-butene copolymer (a) having a total amount of unsaturated bonds in the above range with a polar compound is blended with a polyamide resin to produce a polyamide resin composition, the polyamide resin composition exhibits excellent flowability and a shaped product that exhibits excellent impact resistance can be obtained.

The vinyl group content refers to the number of vinyl double bonds per 100,000 carbon atoms.

The total amount of unsaturated bonds refers to the total number of vinyl double bonds, vinylidene double bonds, di-substituted olefinic double bonds, and tri-substituted olefinic double bonds per 100,000 carbon atoms.

The vinyl group content and the total amount of unsaturated bonds can be calculated by measuring $^1$H-NMR under the conditions described in a section of Examples described later.

<Method of producing ethylene/1-butene copolymer (a)>

The ethylene/1-butene copolymer (a) that satisfies the requirements (a-i) and (a-ii) can be produced by a publicly known method. The ethylene/1-butene copolymer (a) can be prepared, for example, by copolymerizing ethylene and 1-butene in the presence of a publicly known catalyst capable of polymerizing an olefin (for example, a catalyst mainly composed of a solid titanium component and an organometallic compound, a vanadium-based catalyst composed of a soluble vanadium compound and an alkylaluminum halide compound, or a zirconium-based catalyst composed of a metallocene compound of zirconium and an organoaluminum-oxy compound). The catalyst is preferably a catalyst containing a metallocene compound as a catalyst component.

The component (a) preferably satisfies one or more requirements selected from the group consisting of the following requirements (a-iii) to (a-vi), more preferably satisfies the two or more requirements, and particularly preferably satisfies all of the requirements.

[Requirement (a-iii)]

$MFR_{2.16}$ is in the range of 2.0 to 20.0 g/10 min.

The $MFR_{2.16}$ is preferably in the range of 2.2 to 18.0 g/10 min, more preferably 2.5 to 16.0 g/10 min, still more preferably 2.6 to 15.0 g/10 min, and particularly preferably 3.0 to 14.0 g/10 min. When the $MFR_{2.16}$ of the ethylene-1-butene copolymer (a) falls within the above range, and the ethylene/1-butene copolymer (a) is graft-modified with a polar compound to produce a graft-modified ethylene/1-butene copolymer (A), the polyamide resin composition, obtained by blending the graft-modified copolymer (A) with a polyamide resin, exhibits excellent flowability, and a shaped product containing the composition exhibits excellent impact resistance.

[Requirement (a-iv)]

The content of a constituent unit derived from ethylene is in the range of 70 to 95 mol%, and the content of a constituent unit derived from 1-butene is in the range of 5 to 30 mol% with the proviso that the total content of a constituent unit derived from ethylene and a constituent unit derived from 1-butene is 100 mol%.

The content of a constituent unit derived from ethylene is preferably in the range of 73 to 93 mol%, more preferably 76 to 91 mol%, still more preferably 78 to 89 mol%, and particularly preferably 80 to 87 mol%, and the content of a constituent unit derived from 1-butene is preferably in the range of 7 to 27 mol%, more preferably 9 to 24 mol%, still more preferably 11 to 22 mol%, and particularly preferably 13 to 20 mol%.

The content (mol%) of constituent units derived from each comonomer is calculated, for example, by analysis of $^{13}$C-NMR spectrum. When the content of a constituent unit derived from 1-butene in component (a) falls within the above range, and the ethylene/1-butene copolymer (a) is graft-modified with a polar compound to produce a graft-modified ethylene/1-butene copolymer (A), the polyamide resin composition, obtained by blending the graft-modified copolymer (A) with a polyamide resin, exhibits excellent flowability, and a shaped product containing the composition exhibits excellent impact resistance.

Ethylene and 1-butene, which are monomers constituting an ethylene/$\alpha$-olefin copolymer (a), may be, for example, monomers derived from fossil fuels and/or monomers derived from a biomass, and these monomers may be used singly or in combination of two or more thereof.

[Requirements (a-v)]

The density measured under condition of 25°C in accordance with ASTM D1505 is in the range of 850 to 885 kg/m$^3$.

The density is preferably in the range of 855 to 882 kg/m$^3$, more preferably 860 to 879 kg/m$^3$, still more preferably 861 to 878 kg/m$^3$, and particularly preferably 865 to 876 kg/m$^3$. When the density of the ethylene/1-butene copolymer (a) falls within the above range, and the ethylene/1-butene copolymer (a) is graft-modified with a polar compound to produce a graft-modified ethylene/1-butene copolymer (A), the polyamide resin composition obtained by blending the graft-modified copolymer (A) with a polyamide resin exhibits excellent flowability, and a shaped product containing the polyamide resin composition is lightweight and exhibits excellent impact resistance.

[Requirements (a-vi)]

The ratio (Mw/Mn) of the weight-average molecular weight (Mw) to the number-average molecular weight (Mn) measured by gel permeation chromatography (GPC) is in the range of 1.2 to 3.5.

When the graft-modified ethylene/1-butene copolymer (A) produced by graft-modifying the ethylene/1-butene copolymer (a) with a polar compound is mixed with a polyamide resin to produce a polyamide resin composition, the use of ethylene/1-butene copolymer (a) having an Mw/Mn in the above range inhibits stickiness of a shaped product containing the polyamide resin composition.

<Graft-modified ethylene/1-butene copolymer (A)>

The graft-modified ethylene/1-butene copolymer (A) according to one embodiment of the present invention is a copolymer obtained by graft-modifying the ethylene/1-butene copolymer (a) with a polar compound.

<Polar Compound>

In one embodiment of the present invention, the polar compound is used to graft-modify the ethylene/1-butene copolymer (a) to produce the graft-modified ethylene/1-butene copolymer (A).

The polar compound is preferably at least one selected from the group consisting of a hydroxyl group-containing ethylenically unsaturated compound, an amino group-containing ethylenically unsaturated compound, an epoxy group-containing ethylenically unsaturated compound, an aromatic vinyl compound, unsaturated carboxylic acid and a derivative thereof, a vinyl ester compound, and vinyl chloride. From the viewpoint of reactivity with a polyamide resin, the polar compound is more preferably at least one selected from the group consisting of an unsaturated carboxylic acid and a derivative thereof.

Examples of the hydroxyl group-containing ethylenically unsaturated compound include (meth)acrylic acid esters such as hydroxyethyl (meth)acrylate, 2-hydroxypropyl (meth)acrylate, 3-hydroxypropyl (meth)acrylate, 2-hydroxy-3-phenoxypropyl (meth)acrylate, 3-chloro-2-hydroxypropyl (meth)acrylate, glycerin mono(meth)acrylate, pentaerythritol mono(meth)acrylate, trimethylolpropane mono(meth)acrylate, tetramethylolethane mono(meth)acrylate, butanediol mono(meth)acrylate, polyethylene glycol mono(meth)acrylate, and 2-(6-hydroxyhexanoyloxy)ethyl acrylate; 10-undecen-1-ol, 1-octen-3-ol, 2-methanol norbornene, hydroxystyrene, hydroxyethyl vinyl ether, hydroxybutyl vinyl ether, N-methylol acrylamide, 2-(meth)acryloyloxyethyl acid phosphate, glycerin monoallyl ether, allyl alcohol, allyloxyethanol, and 2-butene-1,4-diol.

Examples of the amino group-containing ethylenically unsaturated compound include alkyl ester-based derivatives of acrylic acid or methacrylic acid, such as aminoethyl (meth)acrylate, propylaminoethyl (meth)acrylate, dimethylaminoethyl methacrylate, aminopropyl (meth)acrylate, phenylaminoethyl methacrylate, and cyclohexylaminoethyl methacrylate; vinylamine-based derivatives, such as N-vinyldiethylamine and N-acetylvinylamine; allylamine-based derivatives, such as allylamine, methacrylamine, N-methylacrylamine, N,N-dimethylacrylamide, and N,N-dimethylaminopropylacrylamide; acrylamide-based derivatives, such as acrylamide and N-methylacrylamide; an aminostyrene, such as p-aminostyrene; 6-aminohexylsuccinimide, and 2-aminoethylsuccinimide.

Examples of the epoxy group-containing ethylenically unsaturated compound include glycidyl acrylate, glycidyl methacrylate; mono and alkylglycidyl esters of dicarboxylic acid (the alkyl group of the monoglycidyl ester has 1 to 12 carbon atoms) such as mono- and diglycidyl esters of maleic acid, mono- and diglycidyl esters of fumaric acid, mono- and diglycidyl esters of crotonic acid, mono- and diglycidyl esters of tetrahydrophthalic acid, mono- and glycidyl esters of itaconic acid, mono- and diglycidyl esters of butene tricarboxylic acid, mono- and diglycidyl esters of citraconic acid, mono- and diglycidyl esters of endo-cis-bicyclo[2.2.1]hept-5-ene-2,3-dicarboxylic acid (Nadic acid(TM)), mono- and diglycidyl esters of endo-cis-bicyclo[2.2.1]hept-5-ene-2-methyl 2,3-dicarboxylic acid (Methylnadic acid(TM)), and mono and glycidyl esters of allyl succinic acid; an alkyl glycidyl ester of p-styrene carboxylic acid, allyl glycidyl ether, 2-methylallyl glycidyl ether, styrene p-glycidyl ether, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene, and vinylcyclohexene monoxide.

Examples of the aromatic vinyl compound include styrene, $\alpha$-methylstyrene, o-methylstyrene, p-methylstyrene, m-methylstyrene, p-chlorostyrene, m-chlorostyrene, p-chloromethylstyrene, 4-vinylpyridine, 2-vinylpyridine, 5-ethyl-2-vinylpyridine, 2-methyl-5-vinylpyridine, 2-isopropenylpyridine, 2-vinylquinoline, 3-vinylisoquinoline, N-vinylcarbazole, and N-vinylpyrrolidone.

Examples of the vinyl ester compound include vinyl acetate, vinyl propionate, vinyl n-butyrate, vinyl isobutyrate, vinyl pivalate, vinyl caproate, vinyl versatate, vinyl laurate, vinyl stearate, vinyl benzoate, vinyl p-tert-butylbenzoate, vinyl salicylate, and vinyl cyclohexanecarboxylate.

An example of the unsaturated carboxylic acid includes an unsaturated carboxylic acid having 3 to 10 carbon atoms, preferably 3 to 8 carbon atoms. An example of a derivative of the unsaturated carboxylic acid includes a derivative of an unsaturated carboxylic acid having 3 to 10 carbon atoms, preferably 3 to 8 carbon atoms.

Examples of the unsaturated carboxylic acid include acrylic acid, maleic acid, fumaric acid, tetrahydrophthalic acid, itaconic acid, citraconic acid, crotonic acid, isocrotonic acid, and Nadic acid(TM) (endo-cis-bicyclo[2,2,1]hept-5-ene-2,3-dicarboxylic acid).

Examples of the derivative of the unsaturated carboxylic acid include acid halide, ester, imide, acid anhydride, and ester compounds of the unsaturated carboxylic acids, and specific examples thereof include malenyl chloride, maleimide, maleic anhydride, citraconic anhydride, monomethyl maleate, dimethyl maleate, and glycidyl maleate.

The at least one selected from the group consisting of the unsaturated carboxylic acid and its derivative is suitably at least one selected from the group consisting of an unsaturated dicarboxylic acid and its acid anhydride, and particularly at least one selected from the group consisting of maleic acid, Nadic acid(TM) and their acid anhydrides.

The unsaturated carboxylic acid, which is a monomer constituting the graft-modified ethylene/1-butene copolymer (A), may be, for example, a monomer derived from fossil fuels and/or a monomer derived from a biomass, and these monomers may be used singly or in combination of two or more thereof.

<Graft-modified ethylene/1-butene copolymer (A)>

The graft-modified ethylene/1-butene copolymer (A) usually satisfies one or more of the requirements selected from the group consisting of the following requirements (A-i) to (A-v), preferably two or more of the requirements, and more preferably all of the requirements.

[Requirement (A-i)]

The ratio ($MFR_{10}/MFR_{2.16}$) of the melt flow rate ($MFR_{10}$) measured under conditions of 190°C and a load of 10 kg in accordance with ASTM D1238 to the melt flow rate ($MFR_{2.16}$) measured under conditions of 190°C and a load of 2.16 kg in accordance with ASTM D1238 is in the range of 11.5 to 18.0.

The $MFR_{10}/MFR_{2.16}$ is preferably in the range of 12.5 to 17.6, more preferably 13.0 to 17.3, and still more preferably 13.5 to 17.0. When $MFR_{10}/MFR_{2.16}$ of the graft-modified ethylene/1-butene copolymer (A) is in the above range, the polyamide resin composition exhibits excellent flowability, and a shaped product that exhibits excellent impact resistance can be produced.

The $MFR_{10}$ of the graft-modified ethylene/1-butene copolymer (A) is preferably in the range of 0.1 to 100 g/10 min, more preferably 0.5 to 90 g/10 min, still more preferably 1 to 80 g/10 min, more preferably 2 to 70 g/10 min, still more preferably 3 to 65 g/10 min, particularly preferably 4 to 60 g/10 min, and most preferably 5 to 58 g/10 min. The graft-modified ethylene/1-butene copolymer (A) having $MFR_{10}$ in the above range is easily dispersed in polyamide. Therefore, when the graft-modified ethylene/1-butene copolymer (A) is blended with a polyamide resin to produce a polyamide resin composition, the polyamide resin composition exhibits excellent flowability, and a shaped product containing the polyamide resin composition exhibits excellent impact resistance.

[Requirement (A-ii)]

The vinyl group content is in the range of 5.0 to 20.0 groups, and the total amount of unsaturated bonds is in the range of 40.0 to 200.0 bonds, per 100,000 carbon atoms as calculated by $^1$H-NMR.

The vinyl group content is preferably in the range of 5.5 to 17.0 groups, more preferably 6.0 to 14.0 groups, and still more preferably 6.5 to 11.0 groups. The total amount of unsaturated bonds is preferably in the range of 45.0 to 190.0 bonds, more preferably 50.0 to 180.0 bonds, and still more preferably 55.0 to 170.0 bonds.

When the graft-modified ethylene/1-butene copolymer (A) having a total amount of unsaturated bonds in the above range is blended with a polyamide resin to produce a polyamide resin composition, the polyamide resin composition exhibits excellent flowability, and a shaped product that exhibits excellent impact resistance can be obtained.

The vinyl group content and the total amount of unsaturated bonds can be calculated by measuring $^1$H-NMR under the conditions described in the section of Examples described later.

[Requirement (A-iii)]

The amount of graft modification is in the range of 0.1 to 2.0% by mass based on 100% by mass of the graft-modified ethylene/1-butene copolymer (A).

The amount of graft modification is preferably in the range of 0.3 to 1.7% by mass, more preferably 0.3 to 1.5% by mass, and still more preferably 0.5 to 1.2% by mass. When the amount of graft modification in the graft-modified ethylene/1-butene copolymer (A) falls within the above range, the polyamide resin composition exhibits excellent flowability, and a shaped product containing the polyamide resin composition exhibits excellent impact resistance.

The amount of graft modification can be calculated by measuring FT-IR under the conditions described in the section of Example described later.

[Requirement (A-iv)]

The melt flow rate ($MFR_{2.16}$) measured under conditions of 190°C and a load of 2.16 kg in accordance with ASTM D1238 is in the range of 0.01 to 5.00 g/10 min.

The above-described $MFR_{2.16}$ is preferably in the range of 0.02 to 4.75 g/10 min, more preferably 0.04 to 4.00 g/10 min, still more preferably 0.08 to 3.00 g/10 min, and particularly preferably 0.10 to 2.00 g/10 min. When the $MFR_{2.16}$ of the graft modified ethylene/1-butene copolymer (A) falls within the above range, a polyamide resin composition excellent in formability is obtained, and a shaped product excellent in impact resistance can be produced.

[Requirement (A-v)]

The density measured under condition of 25°C in accordance with ASTM D1505 is 850 to 885 $kg/m^3$.

The density is preferably in the range of 858 to 882 $kg/m^3$, more preferably 859 to 880 $kg/m^3$, still more preferably 866 to 879 $kg/m^3$, and yet still more preferably 870 to 877 $kg/m^3$. When the density of the graft-modified ethylene/1-butene copolymer (A) falls within the above range, a lightweight, thinner shaped product that exhibits excellent impact resistance can be produced from a polyamide resin composition containing the graft-modified ethylene/1-butene copolymer (A) and a polyamide resin.

In the graft-modified ethylene/1-butene copolymer (A), the position at which the polar compound is grafted to the ethylene/1-butene copolymer (a) is not particularly limited as long as the polar compound is bonded to an arbitrary carbon atom in the ethylene/1-butene copolymer (a).

<Method for producing graft-modified ethylene/1-butene copolymer (A)>

The graft-modified ethylene/1-butene copolymer (A) is obtained by various publicly known production methods, for example, by a graft reaction of the ethylene/1-butene copolymer (a) with the polar compound in the presence of a radical initiator. Examples of the method for producing the graft-modified ethylene/1-butene copolymer (A) by a graft reaction of the ethylene/1-butene copolymer (a) with the polar compound, include the following methods:

(1) A method for melting the ethylene/1-butene copolymer (a) and adding the polar compound or the like to graft-copolymerize them.
(2) A method for dissolving the ethylene/1-butene copolymer (a) in a solvent and adding the polar compound or the like to graft-copolymerize them.

In these methods, the amount of the polar compound used is usually 0.010 to 15 parts by mass and preferably 0.010 to 5.0 parts by mass, based on 100 parts by mass of the ethylene/1-butene copolymer (a). The amount of the radical initiator used is usually 0.001 to 1.0 parts by mass and preferably 0.005 to 0.30 parts by mass, based on 100 parts by mass of the ethylene/1-butene copolymer (a).

As the radical initiator, for example, an organic peroxide, an azo compound, or a metal hydride can be used. The radical initiator can be used by directly mixing it with the polar compound (for example, maleic acid or its anhydride), the ethylene/1-butene copolymer (a) before modification, and other components, but can also be used after having been dissolved in a small amount of organic solvent. The organic solvent is not particularly limited as long as it is an organic solvent capable of dissolving the radical initiator.

A reaction temperature in the graft reaction is usually in the range of 70 to 280°C and preferably 80 to 260°C. A reaction time in the graft reaction is usually 0.5 to 15 hours and preferably 1 to 10 hours.

Using an extruder or the like, the graft-modified ethylene/1-butene copolymer (A) can also be produced by reacting the polar compound with the ethylene/1-butene copolymer (a) in the presence of the radical initiator in the absence of a solvent. The reaction in the absence of a solvent is usually preferably carried out at a temperature of the melting point of the ethylene/1-butene copolymer (a) or higher for 0.5 to 10 minutes.

<Polyamide resin (B)>

The polyamide resin (B), which is the main component of the polyamide resin composition according to one embodiment of the present invention, is not particularly limited, and various conventionally known polyamide resins, such as an aliphatic polyamide, a semi-aromatic polyamide, or an aromatic polyamide, can be limitlessly used within the range that does not impair the effects of the present invention. For example, an amino acid lactam or a melt-formable polyamide resin obtained by a polycondensation reaction between an organic diamine and an organic dicarboxylic acid can be used as the polyamide resin (B).

Examples of the organic dicarboxylic acid include organic dicarboxylic acids having 4 to 12 carbon atoms, such as adipic acid, pimelic acid, suberic acid, phthalic acid, terephthalic acid, isophthalic acid, naphthalenedicarboxylic acid, phenylenedioxydiacetic acid, sebacic acid, and dodecanedioic acid; and organic dicarboxylic acids having 13 or more carbon atoms, such as oxydibenzoic acid, diphenylmethanedicarboxylic acid, diphenylsulfonedicarboxylic acid, and biphenyldicarboxylic acid. Examples of the organic diamine include organic diamines having 2 to 13 carbon atoms, such as hexamethylenediamine, octamethylenediamine, nonanediamine, octanediamine, decanediamine, undecanediamine, and dodecanediamine.

An example of the polyamide resin (B) include a polycondensate of an organic dicarboxylic acid having 4 to 12 carbon atoms and an organic diamine having 2 to 13 carbon atoms. Examples of the polycondensate include polyhexamethylene adipamide [polyamide 66], which is a polycondensate of hexamethylene diamine and adipic acid, polyhexamethylene azelamide [polyamide 69], which is a polycondensate of hexamethylene diamine and azelaic acid, polyhexamethylene sebacamide [polyamide 610], which is a polycondensate of hexamethylene diamine and sebacic acid, and polyhexamethylene dodecaneamide [polyamide 612], which is a polycondensate of hexamethylene diamine and dodecanedioic acid, polydecamethylenesebacamide [polyamide 1010], which is a polycondensate of decamethylenediamine and sebacic acid, semi-aromatic polyamides (Polyamide 6T, Polyamide 9T, Polyamide 10T, and Polyamide 11T), which are polycondensates of aromatic dicarboxylic acids and aliphatic diamines, and polybis(4-aminocyclohexyl) methanedodecane, which is a polycondensate of bis-p-aminocyclohexylmethane and dodecanedioic acid.

An example of the polyamide resin (B) also includes a polycondensate of an ω-aminoacid. An example of the polycondensate of the ω-aminoacid includes polyundecaneamide [Polyamide 11], which is a polycondensate of ω-aminoundecanoic acid.

An example of the polyamide resin (B) also includes a ring-opening polymer of a lactam. Examples of the ring-opening polymer of a lactam include polycapramide [polyamide 6], which is a ring-opening polymer of ε-aminocaprolactam, and polylauric lactam [polyamide 12], which is a ring-opening polymer of ε-aminolaurolactam.

The polyamide resin (B) may be modified with a small amount of trivalent or higher polyhydroxy compound and polycarboxylic acid such as a triol or a tricarboxylic acid as long as it exhibits thermoplasticity.

From the viewpoint of a balance between the flowability of the polyamide resin composition and the impact resistance of a shaped product, the polyamide resin (B) is preferably one or more aliphatic polyamide resins selected from the group consisting of polyamide 6, polyamide 66, polyamide 11, polyamide 12, polyamide 612, polyamide 610, and polyamide 1010.

Among them, the polyamide resin (B) is preferably an aliphatic polyamide and more preferably polyhexamethylene adipamide [polyamide 66], polyhexamethylene azelamide [polyamide 69], and polycapramide [polyamide 6].

Also, for example, a polyamide resin produced from adipic acid, isophthalic acid, and hexamethylene diamine may be used, and a blend of two or more polyamide resins compounded, such as a mixture of polyamide 6 and polyamide 66 may be used as the polyamide resin (B).

A raw material for the polyamide resin (B) may be either a raw material derived from fossil fuels or a raw material derived from a biomass. A fossil fuel-derived raw material and a biomass-derived raw material may be combined for use.

The number-average molecular weight (Mn) of the polyamide resin (B) measured by GPC is preferably in the range of 15,000 to 27,000, more preferably 17,000 to 25,000, and particularly preferably 19,000 to 23,000.

The spiral flow length of the polyamide resin (B) measured with an injection molding machine is preferably in the range of more than 600 mm, more preferably more than 625 mm, and particularly preferably more than 650 mm.

The spiral flow length of polyamide 66 measured under conditions of a melting temperature of 290°C and an injection pressure of 900 Bar preferably falls within the above range, and the spiral flow length of polyamide 6 measured under conditions of a melting temperature of 260°C and an injection pressure of 900 Bar preferably falls within the above range.

When a polyamide resin (B) having a number average molecular weight (Mn) and a spiral flow length within the above range is used, the inherent fluidity of the polyamide resin (B) can be sufficiently exhibited in the polyamide resin composition, and this fluidity is not significantly impaired even when blended with the graft-modified ethylene/1-butene copolymer (A). As a result, the flowability of the polyamide resin composition and the impact resistance of a shaped product containing the polyamide resin composition are excellent in a well-balanced manner.

<Polyamide resin composition>

The polyamide resin composition according to one embodiment of the present invention preferably contains 50 to 99 parts by mass of the polyamide resin (B) and 1 to 50 parts by mass of the graft-modified ethylen/1-butene copolymer (A), based on 100 parts by mass of the total content of the polyamide resin (B) and the graft-modified ethylene/1-butene copolymer (A). The polyamide resin composition more preferably contains 65 to 97 parts by mass of the polyamide resin (B) and 3 to 35 parts by mass of the graft-modified ethylene/1-butene copolymer (A), and particularly preferably contains 80 to 95 parts by mass of the polyamide resin (B) and 5 to 20 parts by mass of the graft-modified ethylene/1-butene copolymer (A).

When the content of the polyamide resin (B) and the content of the graft-modified ethylene/1-butene copolymer (A) in the polyamide resin composition fall within the above range, a shaped product of the polyamide resin composition exhibits high impact resistance even when made thinner.

The reason why the flowability of the polyamide resin composition and the impact resistance of the shaped product are excellent in a well-balanced manner is presumed to be as follows.

That is, the ethylene/1-butene copolymer (a) usually has a $MFR_{10}/MFR_{2.16}$ ratio within a specific range, and therefore has long chain branches. Also, the ethylene/1-butene copolymer (a) usually has a vinyl group content and a total amount of unsaturated bonds within specific ranges. Therefore, the graft-modified ethylene/1-butene copolymer (A) using the ethylene/1-butene copolymer (a) has a viscosity ratio close to that of the polyamide resin (B), and the graft-modified ethylene/1-butene copolymer (A) is easily dispersed in the polyamide resin composition. Also, the graft-modified ethylene/1-butene copolymer (A) is grafted with the polar compound, and therefore has high compatibility with the polyamide resin (B). Therefore, it is conjectured that the graft-modified ethylene/1-butene copolymer (A) is more likely to be further dispersed in the polyamide resin composition, so that the flowability of the polyamide resin composition and the impact resistance of the shaped product are excellent in a well-balanced manner.

<Other components>

The polyamide resin composition according to one embodiment of the present invention may further contain a component other than the polyamide resin (B) and the graft-modified ethylene/1-butene copolymer (A) as long as the purpose of the present invention is not impaired. That is, the polyamide resin composition according to one embodiment of the present invention may contain additives such as a weathering stabilizer, a heat stabilizer, an ultraviolet ray absorber, an infrared ray absorber, an antistatic agent, an anti-slip agent, an anti-blocking agent, an anti-fogging agent, a lubricant, a pigment, a dye, a plasticizer, an anti-aging agent, a hydrochloric acid absorber, an antioxidant, a crystal nucleating agent, an antifungal agent, an antibacterial agent, a flame retardant, an organic filler, a release agent, a surfactant, and a softener, if necessary, as long as the purpose of the present invention is not impaired. These additives may be contained singly, or a plurality of additives may be contained. The polyamide resin composition according to one embodiment of the present invention may also contain another polymer as long as it does not impair the purpose of the present invention.

<Method for producing polyamide resin composition>

The polyamide resin composition according to one embodiment of the present invention can be produced by a publicly known method for producing a resin composition accompanied by melt kneading or the like whereby the polyamide resin (B), the graft-modified ethylene/1-butene copolymer (A), and the arbitrary other component are used as raw materials and blended sequentially or simultaneously.

<Application>

The polyamide resin composition according to one embodiment of the present invention exhibits excellent flowability, and the obtained shaped product exhibits high impact resistance even when made thinner. Therefore, the polyamide resin composition can be used to produce various pellets and shaped products.

<Pellet>

One embodiment of the present invention is a pellet containing the polyamide resin composition. The pellet has, for example, a spherical, cylindrical, lenticular, or cubic shape. The pellet can be produced by a known pelletizing method. An example of the method for producing the pellet includes a method for homogeneously melt-mixing, for example, the polyamide resin (B), the graft-modified ethylene/1-butene copolymer (A), and the arbitrary other component, extruding the mixture with an extruder, and then hot-cutting or strand-cutting the extrudate to produce a spherical, cylindrical, or lenticular pellet. In this case, the pellet can be cut either in water or in a flow of gas, such as air. Also, a cubic pellet can be obtained, for example, by homogeneously mixing the mixture, forming it into a sheet with a roll or the like, and using a sheet pelletizer. A size of the pellet is preferably 3 cm or less at the longest portion of the pellet.
The pellet can be used, for example, to produce a shaped product, preferably a shaped product by melt forming. The melt forming can be performed by an arbitrary melt forming method, such as compression forming, injection molding, or extrusion forming.

<Injection molded article>

One embodiment of the present invention is an injection molded article including the polyamide resin composition. The injection molded article can be obtained by injection molding the polyamide resin composition by a commonly used method.
The injection molded article of one embodiment of the present invention is used in a wide range of applications, from household items such as daily necessities and recreational applications to general industrial applications and industrial products. Examples of the application of the injection molded article include components or members of various products such as home appliances, telecommunication equipment, electrical and electronic equipment, automobiles, other vehicles, ships, aircrafts, building materials, civil engineering materials, agricultural materials, power tools, food containers, films, sheets, and fibers. Among them, the injection molded article can be suitably used as automotive components or members.
The injection molded article can also be suitably used as components for, for example, a gasoline vehicle, a hybrid vehicle (HV), a plug-in hybrid vehicle (PHV), an electric vehicle (EV), a fuel cell vehicle (FCV). The injection molded article can also be suitably used as a component for an electric motorcycle.
The automotive components or members include a wide range of components or members, and examples thereof include interior components or members such as a door trim, a door module, an instrument panel, a center panel, a roof panel, a back door panel, accelerator and brake pedals; vertical outer panels such as a door, a fender, and a back door; horizontal outer panels such as a bonnet and a roof; engine room members such as an air intake, a front-end module, and a fan shroud; and automotive electrical components.
Examples of the automotive electrical components include a wire harness connector, a cable connector, a lamp socket, a sensor-mounted switch, a combination switch, a battery, a motor mount, a power module, a converter, a capacitor, an insulator, a motor terminal block, and an electric compressor.

Examples

Hereinafter, one embodiment of the present invention will be described in more detail based on Examples, but the present invention is not in any way limited to these Examples.

Each component used in the following Examples and Comparative Examples are as follows.

<Ethylene/1-butene copolymer (a)>

In order to produce the graft-modified ethylene/1-butene copolymer (A), ethylene/1-butene copolymers (a-1) to (a-11) and (a'-1) polymerized using a metallocene-based catalyst were used.

<Production Example 1; Production of ethylene/1-butene copolymer (a-1)>

To one of supply ports of a continuous polymerization vessel having an internal volume of 130 L and equipped with stirring blades were fed a hexane solution of triisobutylaluminum as a cocatalyst at a rate of 12 mmol/hr, a hexane solution of bis(4-methylphenyl)methylene(cyclopentadienyl) (1,2,3,4,7,8,9,10-octahydro-1,1,4,4,7,7,10,10-octamethyldibenzo(b,h)fluoren-12-yl)zirconium dichloride as a main catalyst at a rate of 0.0082 mmol/hr, and a hexane slurry solution of modified methylaluminoxane at a rate of 0.034 mmol/hr, and was continuously fed dehydrated and purified normal hexane used as a polymerization solvent such that the total rate of the catalyst solution and the normal hexane was 37.3 L/hr.
At the same time, to another supply port of the polymerization vessel, were continuously fed ethylene at a rate of 6.6 kg/hr, 1-butene at 8.1 kg/hr, and hydrogen at 110 NL/hr, to carry out a continuous solution polymerization under the conditions of a polymerization temperature of 155°C, a total pressure of 2.5 MPaG, and a residence time of 0.5 hours. The normal hexane/toluene mixed solution of ethylene/1-butene copolymer, produced in the polymerization vessel, was continuously discharged through an outlet provided on a side of the polymerization vessel, and was introduced into a connecting pipe with a jacket portion having been heated with 3 kg/cm$^2$ steam so that the temperature of the normal hexane solution of ethylene/1-butene copolymer was 130°C.
The normal hexane solution of ethylene/1-butene copolymer, which had been kept at approximately 200°C in the connecting pipe with a steam jacket, was continuously sent to a flash tank by adjusting an aperture of a pressure control valve installed at the end of the connecting pipe so as to maintain a pressure of approximately 2.5 MPaG. A supply port for injecting methanol as a catalyst deactivator was provided just downstream of the pressure control valve, and methanol was injected at about 11 L/hr to join the normal hexane solution of the ethylene/1-butene copolymer. Also, during transfer of the solution to the flash tank, the solution temperature and the aperture of the pressure control valve were set such that the pressure in the flash tank was maintained at approximately 0.05 MPaG and the temperature of the steam portion in the flash tank was maintained at approximately 200°C. Thereafter, the ethylene/1-butene copolymer was passed through a single-screw extruder with the die temperature set at 170°C, and the obtained strand was cooled in a water bath, and then cut with a pelletizer to obtain ethylene/1-butene copolymer (a-1) in the form of pellets. The yield was 8.2 kg/2 hr.

<Production Example 2; Production of ethylene/1-butene copolymer (a-2)>

The ethylene/1-butene copolymer (a-2) was produced in the same manner as in the Production Example 1, except that the rate of 1-butene supplied was adjusted to 7.5 kg/hr.

<Production Example 3; Production of ethylene/1-butene copolymer (a-3)>

The ethylene/1-butene copolymer (a-3) was produced in the same manner as in the Production Example 1, except that the rate of 1-butene supplied was adjusted to 7.4 kg/hr.

<Production Example 4: Production of ethylene/1-butene copolymer (a-4)>

The ethylene/1-butene copolymer (a-4) was produced in the same manner as in the Production Example 1, except that bis(4-methylphenyl)methylene(cyclopentadienyl) (1,2,3,4,7,8,9,10-octahydro-1,1,4,4,7,7,10,10-octamethyldibenzo(b,h)fluoren-12-yl)zirconium dimethyl and triphenylcarbenium tetrakis(pentafluorophenyl)borate were used as the main catalysts, and the rate of 1-butene supplied was adjusted to 9.8 kg/hr, the rate of ethylene supplied to 6.9 kg/hr, and the polymerization temperature to 130°C.

<Production Example 5; Production of ethylene/1-butene copolymer (a-5)>

The ethylene/1-butene copolymer (a-5) was produced in the same manner as in the Production Example 4, except that the rate of 1-butene supplied was adjusted to 6.4 kg/hr, the rate of ethylene supplied was adjusted to 5.0 kg/hr, and the polymerization temperature was adjusted to 160°C.

<Production Example 6; Production of ethylene/1-butene copolymer (a-6)>

The ethylene/1-butene copolymer (a-6) was produced in the same manner as in the Production Example 4, except that the rate of 1-butene supplied was adjusted to 9.4 kg/hr, the rate of ethylene supplied was adjusted to 6.6 kg/hr, and the polymerization temperature was adjusted to 150°C.

<Production Example 7; Production of ethylene/1-butene copolymer (a-7)>

The ethylene/1-butene copolymer (a-7) was produced in the same manner as in the Production Example 4, except that the rate of 1-butene supplied was adjusted to 9.1 kg/hr, the rate of ethylene supplied was adjusted to 6.4 kg/hr, and the polymerization temperature was adjusted to 150°C.

<Production Example 8; Production of ethylene/1-butene copolymer (a-8)>

The ethylene/1-butene copolymer (a-8) was produced in the same manner as in the Production Example 4, except that the rate of 1-butene supplied was adjusted to 8.7 kg/hr, the rate of ethylene supplied was adjusted to 6.2 kg/hr, and the polymerization temperature was adjusted to 150°C.

<Production Example 9; Production of ethylene/1-butene copolymer (a-9)>

The ethylene/1-butene copolymer (a-9) was produced in the same manner as in the Production Example 4, except that the rate of 1-butene supplied was adjusted to 8.8 kg/hr, the rate of ethylene supplied was adjusted to 6.4 kg/hr, and the polymerization temperature was adjusted to 140°C.

<Production Example 10; Production of ethylene/1-butene copolymer (a-10)>

The ethylene/1-butene copolymer (a-10) was produced in the same manner as in the Production Example 4, except that the rate of 1-butene supplied was adjusted to 9.8 kg/hr, the rate of ethylene supplied was adjusted to 5.9 kg/hr, and the polymerization temperature was adjusted to 140°C.

<Production Example 11; Production of ethylene/1-butene copolymer (a-11)>

The ethylene/1-butene copolymer (a-11) was produced in the same manner as in the Production Example 4, except that the rate of 1-butene supplied was adjusted to 9.4 kg/hr, the rate of ethylene supplied was adjusted to 5.8 kg/hr, and the polymerization temperature was adjusted to 140°C.

<Ethylene/1-butene copolymer (a'-1)>

ENGAGE 7447 (manufactured by The Dow Chemical Company) was used as the ethylene/1-butene copolymer (a'-1).
The physical properties of the ethylene/1-butene copolymer (a) were evaluated using the following physical property measurement methods. Each evaluation result is shown in Table 1.

[$MFR_{2.16}$, $MFR_{10}$, and $MFR_{10}/MFR_{2.16}$]

Each melt flow rate ($MFR_{2.16}$ and $MFR_{10}$) were measured under conditions of 190°C and a load of 2.16 kg and under conditions of 190°C and a load of 10 kg in accordance with ASTM D1238, respectively, and the ratio of $MFR_{10}/MFR_{2.16}$ was then calculated.

[Density]

The density was measured at 25°C in accordance with ASTM D1505.

[Content (composition) of constituent unit derived from comonomer]

The content of a constituent unit derived from a comonomer was measured using a nuclear magnetic resonance (NMR) measurement apparatus (JNM GX-400 model, manufactured by JEOL Ltd.). A sample of 0.35 g was dissolved in 2.0 mL of hexachlorobutadiene by heating. After this solution had been filtered through a glass filter (G2), 0.5 mL of deuterated benzene was added, and the obtained solution was charged in an NMR tube with an inner diameter of 10 mm and subjected to $^{13}$C-NMR measurement at 120°C. The number of accumulations was set to 8,000 or more. The content of a constituent unit derived from ethylene and the content (mol%) of a constituent unit derived from 1-butene in the ethylene/1-butene copolymer were quantitatively determined from the obtained $^{13}$C-NMR spectrum.

[Vinyl group content, vinylidene group content, total amount of unsaturated bond]

A sample of 0.35 g was dissolved in 2.0 mL of hexachlorobutadiene by heating. After this solution had been filtered through a glass filter (G2), 0.5 mL of deuterated benzene was added, and the obtained solution was charged in an NMR tube with an inner diameter of 10 mm and subjected to $^1$H-NMR measurement at 120°C. The number of accumulations was set to 100 or more. The vinyl group content, vinylidene group content, and total amount of unsaturated bonds (bonds/100,000 carbon atoms) in the ethylene/1-butene copolymer were quantitatively determined from the obtained $^1$H-NMR spectrum. The $^1$H-NMR measurement was performed using a nuclear magnetic resonance (NMR) measurement apparatus (JNM GX-400 model, manufactured by JEOL Ltd.).

In the $^1$H-NMR spectrum, signals derived from a vinyl double bond, a vinylidene double bond, a di-substituted olefinic double bond, and a tri-substituted olefinic double bond were observed as the signals derived from the double bonds. From the integrated intensity of each signal, the vinyl group content, vinylidene group content, and the total amount of unsaturated bonds, which is the total amount of vinyl double bonds, vinylidene double bonds, di-substituted olefinic double bonds, and tri-substituted olefinic double bonds, were quantitatively determined. The amount of double bond was quantitatively determined using the signal peak positions and the quantification formula described in JP2022-142958A.

[Molecular weight distribution (Mw/Mn)]

Gel permeation chromatography (GPC) measurement was performed to obtain a molecular weight in terms of polystyrene $M_{i\text{-PSt}}$ of each fraction. Next, $M_{i\text{-PSt}}$ was then converted to a molecular weight in terms of EPR, $M_{i\text{-EPR}}$ using the following formulae:

$$[\eta]_{i\text{-PSt}} \times M_{i\text{-PSt}} = [\eta]_{i\text{-EPR}} \times M_{i\text{-EPR}},$$

$$[\eta]_{i\text{-PSt}} = 1.37 \times 10^{-4} \times M_{i\text{-PSt}}^{0.686},$$

and

$$[\eta]_{i\text{-EPR}} = 7.2 \times 10^{-4} \times M_{i\text{-EPR}}^{0.667}.$$

A molecular weight distribution (Mw/Mn) was calculated using the molecular weights in terms of EPR.

Gel permeation chromatography (GPC) measurement was performed using a gel permeation chromatograph Alliance GPC-2000 under the following conditions, manufactured by Waters Corporation.

Separation columns: 2 TSKgel GNH6-HT columns and 2 TSKgel GNH6-HTL columns

Column size: Diameter 7.5 mm and length 300 mm

Column temperature: 140°C

Mobile phase: o-Dichlorobenzene (manufactured by FUJIFILM Wako Pure Chemical Corporation)

Antioxidant: BHT (manufactured by Takeda Pharmaceutical Co., Ltd.) 0.025% by mass

Movement rate: 1.0 mL/min

Sample concentration: 15 mg/10 mL

Sample injection volume: 500 µL

Detector: Differential refractometer

Standard polystyrene: Polystyrenes manufactured by Tosoh Corporation for a molecular weight range of Mw < 1000 and Mw > $4 \times 10^6$ were used, and polystyrenes manufactured by Pressure Chemical Co. for a molecular weight range of $1,000 \leq Mw \leq 4 \times 10^6$ were used.

[Table 1]

Table 1

|  | Unit | Copolymer (a-1) | Copolymer (a-2) | Copolymer (a-3) | Copolymer (a-4) | Copolymer (a-5) | Copolymer (a-6) |
|---|---|---|---|---|---|---|---|
| MFR 216 | g/10 min | 6.2 | 5.7 | 5.3 | 4.5 | 5.2 | 3.3 |
| MFR $_{10}$ | g/10 min | 47 | 42 | 40 | 34 | 45 | 28 |
| MFR $_{10}$/MFR $_{2.16}$ | - | 7.6 | 7.4 | 7.5 | 7.6 | 8.7 | 8.5 |
| Density | kg/m$^3$ | 870 | 873 | 874 | 869 | 871 | 866 |
| Content of a constituent unit derived from ethylene | Mol% | 85 | 87 | 87 | 84 | 85 | 83 |
| Content of a constituent unit derived from 1-butene | Mol% | 15 | 13 | 13 | 16 | 15 | 17 |
| Vinyl group content | Groups/100,000 carbon atoms | 8.7 | 8.3 | 9.1 | 9.0 | 7.4 | 9.3 |
| Vinylidene group content | Groups/100,000 carbon atoms | 22.1 | 21.1 | 23.7 | 6.9 | 15.6 | 13.6 |
| Total amount of unsaturated bonds | Bonds/100,000 carbon atoms | 109.6 | 102.6 | 111.8 | 55.9 | 101.8 | 121.1 |
| Mw/Mn | - | 2.7 | 2.5 | 2.6 | 2.3 | 2.3 | 2.3 |

Table 1 (continued)

|  | Unit | Copolymer (a-7) | Copolymer (a-8) | Copolymer (a-9) | Copolymer (a-10) | Copolymer (a-11) | Copolymer (a'-1) |
|---|---|---|---|---|---|---|---|
| MFR 216 | g/10 min | 5.5 | 13.4 | 9.4 | 3.0 | 5.0 | 5.0 |
| MFR $_{10}$ | g/10 min | 45 | 99 | 70 | 24 | 38 | 32 |
| MFR $_{10}$/MFR $_{2.16}$ | - | 8.2 | 7.4 | 7.4 | 8.0 | 7.6 | 6.4 |
| Density | kg/m$^3$ | 867 | 868 | 869 | 863 | 864 | 868 |

(continued)

|  | Unit | Copolymer (a-7) | Copolymer (a-8) | Copolymer (a-9) | Copolymer (a-10) | Copolymer (a-11) | Copolymer (a'-1) |
|---|---|---|---|---|---|---|---|
| Content of a constituent unit derived from ethylene | Mol% | 84 | 84 | 85 | 82 | 82 | 84 |
| Content of a constituent unit derived from 1-butene | Mol% | 16 | 16 | 15 | 18 | 18 | 16 |
| Vinyl group content | Groups/100,000 carbon atoms | 9.2 | 8.8 | 9.0 | 8.9 | 8.9 | 4.6 |
| Vinylidene group content | Groups/100,000 carbon atoms | 19.7 | 19.7 | 20.1 | 18.4 | 14.9 | 7.9 |
| Total amount of unsaturated bonds | Bonds/1 00,000 carbon atoms | 119.4 | 106.0 | 112.3 | 102.5 | 106.3 | 36.6 |
| Mw/Mn | - | 2.4 | 2.4 | 2.5 | 2.3 | 2.3 | 2.3 |

<Graft-modified ethylene/1-butene copolymer (A)>

Graft-modified ethylene/1-butene copolymers (A-1) to (A-11) and (A'-1) obtained by the following production methods were used as the graft-modified ethylene/1-butene copolymers (A) .

The physical properties of the graft-modified ethylene/1-butene copolymer (A) were evaluated by the above-described physical property measurement method and a measurement method of the amount of graft modification described later. The evaluation results are shown in Table 2.

[Graft-modified ethylene/1-butene copolymer (A-1)]

A solution of 100 g of maleic anhydride (MAH) and 5 g of 2,5-dimethyl-2,5-di-(t-butylperoxy)-3-hexyne (product name: Perhexyne 25B, manufactured by NOF CORPORATION) in acetone was blended with 10 kg of the ethylene/1-butene copolymer (a-1). Next, the resulting blend was then fed into a twin-screw extruder with a screw diameter of 25 mm and L/D=42 through a hopper, and extruded into a strand at a resin temperature of 250°C, a screw rotation speed of 150 rpm, and a discharge rate of 7 kg/hr. The resulting strand was thoroughly cooled and then granulated to obtain a graft-modified ethylene/1-butene copolymer (A-1).

[Graft-modified ethylene/1-butene copolymer (A-2)]

The graft-modified ethylene/1-butene copolymer (A-2) was obtained in the same manner as in the preparation method of the graft-modified ethylene/1-butene copolymer (A-1) above, except that the ethylene/1-butene copolymer (a-2) was used.

[Graft-modified ethylene/1-butene copolymer (A-3)]

The graft-modified ethylene/1-butene copolymer (A-3) was obtained in the same manner as in the preparation method of the graft-modified ethylene/1-butene copolymer (A-1) above, except that the ethylene/1-butene copolymer (a-3) was used.

[Graft-modified ethylene/1-butene copolymer (A-4)]

The graft-modified ethylene/1-butene copolymer (A-4) was obtained in the same manner as in the preparation method of the graft-modified ethylene/1-butene copolymer (A-1) above, except that the ethylene/1-butene copolymer (a-4) was used.

[Graft-modified ethylene/1-butene copolymer (A-5)]

The graft-modified ethylene/1-butene copolymer (A-5) was obtained in the same manner as in the preparation method of the graft-modified ethylene/1-butene copolymer (A-1) above, except that the ethylene/1-butene copolymer (a-5) was used.

[Graft-modified ethylene/1-butene copolymer (A-6)]

The graft-modified ethylene/1-butene copolymer (A-6) was obtained in the same manner as in the preparation method of the graft-modified ethylene/1-butene copolymer (A-1) above, except that the ethylene/1-butene copolymer (a-6) was used.

[Graft-modified ethylene/1-butene copolymer (A-7)]

The graft-modified ethylene/1-butene copolymer (A-7) was obtained in the same manner as in the preparation method of the graft-modified ethylene/1-butene copolymer (A-1) above, except that the ethylene/1-butene copolymer (a-7) was used.

[Graft-modified ethylene/1-butene copolymer (A-8)]

The graft-modified ethylene/1-butene copolymer (A-8) was obtained in the same manner as in the preparation method of the graft-modified ethylene/1-butene copolymer (A-1) above, except that the ethylene/1-butene copolymer (a-8) was used.

[Graft-modified ethylene/1-butene copolymer (A-9)]

The graft-modified ethylene/1-butene copolymer (A-9) was obtained in the same manner as in the preparation method of the graft-modified ethylene/1-butene copolymer (A-1) above, except that the ethylene/1-butene copolymer (a-9) was used.

[Graft-modified ethylene/1-butene copolymer (A-10)]

The graft-modified ethylene/1-butene copolymer (A-10) was obtained in the same manner as in the preparation method of the graft-modified ethylene/1-butene copolymer (A-1) above, except that the ethylene/1-butene copolymer (a-10) was used.

[Graft-modified ethylene/1-butene copolymer (A-11)]

The graft-modified ethylene/1-butene copolymer (A-11) was obtained in the same manner as in the preparation method of the graft-modified ethylene/1-butene copolymer (A-1) above, except that the ethylene/1-butene copolymer (a-11) was used.

[Graft-modified ethylene/1-butene copolymer (A'-1)]

The graft-modified ethylene/1-butene copolymer (A'-1) was obtained in the same manner as in the preparation method of the graft-modified ethylene/1-butene copolymer (A-1) above, except that the ethylene/1-butene copolymer (a'-1) was used.

[Amount of graft modification]

The amount of graft modification (amount of maleic anhydride modification (% by mass)) in each of the graft-modified ethylene/1-butene copolymers (A-1) to (A-11) and (A'-1) were determined from a calibration curve separately

**EP 4 682 182 A1**

prepared based on the peak intensity at a wave number of 1780 $cm^{-1}$ assigned to a carbonyl group in FT-IR.

[Table 2]

Table 2

| | Unit | Copolymer (A-1) | Copolymer (A-2) | Copolymer (A-3) | Copolymer (A-4) | Copolymer (A-5) | Copolymer (A-6) |
|---|---|---|---|---|---|---|---|
| Copolymer (a-1) | Parts by mass | 100 | | | | | |
| Copolymer (a-2) | Parts by mass | | 100 | | | | |
| Copolymer (a-3) | Parts by mass | | | 100 | | | |
| Copolymer (a-4) | Parts by mass | | | | 100 | | |
| Copolymer (a-5) | Parts by mass | | | | | 100 | |
| Copolymer (a-6) | Parts by mass | | | | | | 100 |
| Copolymer (a-7) | Parts by mass | | | | | | |
| Copolymer (a-8) | Parts by mass | | | | | | |
| Copolymer (a-9) | Parts by mass | | | | | | |
| Copolymer (a-10) | Parts by mass | | | | | | |
| Copolymer (a-11) | Parts by mass | | | | | | |
| Copolymer (a'-1) | Parts by mass | | | | | | |
| Maleic anhydride | Parts by mass | 1 | 1 | 1 | 1 | 1 | 1 |
| Perhexyne 25B | Parts by mass | 0.05 | 0.05 | 0.05 | 0.05 | 0.05 | 0.05 |
| Amount of graft modification | % by mass | 0.7 | 0.7 | 0.6 | 0.7 | 0.5 | 0.5 |
| $MFR_{2.16}$ | g/10 min | 0.78 | 0.69 | 0.70 | 0.77 | 0.65 | 0.38 |
| $MFR_{10}$ | g/10 min | 11.5 | 11.2 | 10.2 | 10.9 | 9.4 | 6.3 |
| $MFR_{10}/MFR_{2.16}$ | - | 14.7 | 16.2 | 14.6 | 14.2 | 14.5 | 16.6 |
| Density | $kg/m^3$ | 873 | 875 | 876 | 871 | 873 | 870 |
| Vinyl group content | Groups/100,000 carbon atoms | 7.7 | 7.2 | 8.2 | 7.0 | 6.9 | 8.2 |

(continued)

| | Unit | Copolymer (A-1) | Copolymer (A-2) | Copolymer (A-3) | Copolymer (A-4) | Copolymer (A-5) | Copolymer (A-6) |
|---|---|---|---|---|---|---|---|
| Vinylidene group content | Groups/100,000 carbon atoms | 20.9 | 19.9 | 21.9 | 5.9 | 14.1 | 12.7 |
| Total amount of unsaturated bonds | Bonds/100,000 carbon atoms | 124.8 | 118.4 | 121.5 | 58.0 | 114.8 | 135.1 |
| Mw/M n | - | 4.1 | 3.8 | 3.7 | 4.1 | 4.1 | 3.7 |

Table 2 (continued)

| | Unit | Copolymer (A-7) | Copolymer (A-8) | Copolymer (A-9) | Copolymer (A-10) | Copolymer (A-11) | Copolymer (A'-I) |
|---|---|---|---|---|---|---|---|
| Copolymer (a-1) | Parts by mass | | | | | | |
| Copolymer (a-2) | Parts by mass | | | | | | |
| Copolymer (a-3) | Parts by mass | | | | | | |
| Copolymer (a-4) | Parts by mass | | | | | | |
| Copolymer (a-5) | Parts by mass | | | | | | |
| Copolymer (a-6) | Parts by mass | | | | | | |
| Copolymer (a-7) | Parts by mass | 100 | | | | | |
| Copolymer (a-8) | Parts by mass | | 100 | | | | |
| Copolymer (a-9) | Parts by mass | | | 100 | | | |
| Copolymer (a-10) | Parts by mass | | | | 100 | | |
| Copolymer (a-11) | Parts by mass | | | | | 100 | |
| Copolymer (a'-1) | Parts by mass | | | | | | 100 |
| Maleic anhydride | Parts by mass | 1 | 1 | 1 | 1 | 1 | 1 |
| Perhexyne 25B | Parts by mass | 0.05 | 0.05 | 0.05 | 0.05 | 0.05 | 0.05 |
| Amount of graft modification | % by mass | 0.7 | 0.7 | 0.6 | 0.7 | 0.5 | 0.7 |
| MFR $_{2.16}$ | g/10 min | 4.63 | 3.61 | 1.35 | 1.77 | 1.34 | 1.28 |
| MFR$_{10}$ | g/10 min | 53 | 42 | 16.4 | 22.1 | 16.2 | 14 |

(continued)

| | Unit | Copolymer (A-7) | Copolymer (A-8) | Copolymer (A-9) | Copolymer (A-10) | Copolymer (A-11) | Copolymer (A'-I) |
|---|---|---|---|---|---|---|---|
| $MFR_{10}/MFR_{2.16}$ | - | 11.5 | 11.7 | 12.1 | 12.5 | 12.1 | 10.9 |
| Density | $kg/m^3$ | 872 | 867 | 870 | 864 | 865 | 871 |
| Vinyl group content | Groups/100,000 carbon atoms | 7.4 | 7.3 | 8.1 | 7.8 | 7.1 | 3.9 |
| Vinylidene group content | Groups/100,000 carbon atoms | 8.9 | 12.3 | 15.3 | 13.1 | 10.3 | 7.4 |
| Total amount of unsaturated bonds | Bonds/100,000 carbon atoms | 89.4 | 109.6 | 103.5 | 96.4 | 98.1 | 37.1 |
| Mw/Mn | - | 3.7 | 4.1 | 4.2 | 3.9 | 3.9 | 4.1 |

<Polyamide resin (B)>

The following polyamide resins (B-1) and (B-2) were used as polyamide resins (B).

[Polyamide resin (B-1)]

Polyamide 66 (product name: Amilan CM3007, manufactured by Toray Industries, Inc.), having a spiral flow length exceeding 700 mm under a melt temperature of 290°C and an injection pressure of 900 bar.

[Polyamide resin (B-2)]

Polyamide 6 (product name: Amilan CM1007, manufactured by Toray Industries, Inc.), having a spiral flow length exceeding 700 mm under a melt temperature of 260°C and an injection pressure of 900 bar.

[Example 1]

A dry blend was prepared by blending 10 parts by mass of the graft-modified ethylene/1-butene copolymer (A-1) and 90 parts by mass of the polyamide resin (B-1), which was polyamide 66, using a Henschel mixer.
The dry blend was then fed into the main inlet of a twin-screw extruder (L/D=40, 30 mmΦ) set at 285°C, and extruded at a screw rotation speed of 180 rpm and a discharge rate of 15 kg/hr to prepare a pellet of the polyamide resin composition.
The resulting pellet of the polyamide resin composition was dried at 100°C for 24 hours, and then injection-molded to prepare a test specimen for a physical property test, and the physical properties of the polyamide resin composition were evaluated by the following test methods. The evaluation results are shown in Table 3.

[Physical property test]

(1) Charpy impact test

Under the following test conditions, a hammer was swung onto the back side of the notch of a fixed test specimen, and the impact strength was calculated based on the rebound angle of the hammer after fracture of the specimen and the initial release angle before the test.

(Test conditions)

A test temperature: 23°C/-40°C, a hammer capacity: 4J, a lift-up angle: 149.9, a test specimen: notched, with a remaining width of 8 mm and a width of 4 mm

(2) Flowability

Injection molding was performed in a mold with a 3.8 mmΦ semicircular spiral groove, using an injection molding machine at a cylinder temperature of 290°C, injection pressure of 100 MPa, mold temperature of 80°C under clamping force of 50 t, and a flow distance (spiral flow length) was then measured.

[Examples 2 to 17 and Comparative Examples 1 to 4]

A pellet of the polyamide resin composition was produced and dried, a test specimen was prepared, and the physical properties thereof were evaluated in the same manner as in Example 1, except that the compositions of the graft-modified ethylene/1-butene copolymer (A) and the polyamide resin (B) used in Example 1 were changed as shown in Tables 3 to 5. The evaluation results are shown in Tables 3 to 5.

[Examples 18 to 28 and Comparative Examples 5 to 7]

A pellet of the polyamide resin composition was produced and dried, a test specimen was prepared, and the physical properties thereof were evaluated in the same manner as in Example 1, except that the preset temperature of the twin-screw extruder was changed to 245°C, the compositions of the graft-modified ethylene/1-butene copolymer (A) and the polyamide resin (B) were changed as shown in Tables 4 and 5, and the cylinder temperature in the flowability evaluation was changed to 245°C. Each evaluation result is shown in Tables 4 and 5.

[Table 3]

Table 3

|  | Unit | Example 1 | Example 2 | Example 3 | Example 4 | Example 5 | Example 6 | Example 7 |
|---|---|---|---|---|---|---|---|---|
| Copolymer (A-1) | Parts by mass | 10 |  |  |  |  |  |  |
| Copolymer (A-2) | Parts by mass |  | 10 |  |  |  |  |  |
| Copolymer (A-3) | Parts by mass |  |  | 10 |  |  |  |  |
| Copolymer (A-4) | Parts by mass |  |  |  | 10 |  |  |  |
| Copolymer (A-5) | Parts by mass |  |  |  |  | 10 |  |  |
| Copolymer (A-6) | Parts by mass |  |  |  |  |  | 10 |  |
| Copolymer (A-7) | Parts by mass |  |  |  |  |  |  | 8 |
| Copolymer (A-8) | Parts by mass |  |  |  |  |  |  |  |

(continued)

| | | Unit | Example 1 | Example 2 | Example 3 | Example 4 | Example 5 | Example 6 | Example 7 |
|---|---|---|---|---|---|---|---|---|---|
| Copolymer (A-9) | | Parts by mass | | | | | | | |
| Copolymer (A-10) | | Parts by mass | | | | | | | |
| Copolymer (A-11) | | Parts by mass | | | | | | | |
| Copolymer (A'-1) | | Parts by mass | | | | | | | |
| Polyamide resin (B-1) | | Parts by mass | 90 | 90 | 90 | 90 | 90 | 90 | 92 |
| Polyamide resin (B-2) | | Parts by mass | | | | | | | |
| Charpy impact strength | 23°C (with a notch) | kJ/m$^2$ | 9.6 | 8.9 | 8.9 | 9.1 | 8.6 | 8.7 | 9.0 |
| | -40°C (with a notch) | kJ/m$^2$ | 7.0 | 6.7 | 6.6 | 7.4 | 7.0 | 7.4 | 5.3 |
| Flowability | Spiral flow length | cm | 72.0 | 73.0 | 74.0 | 74.0 | 74.0 | 72.0 | 76.0 |

Table 3 (continued)

| | | Unit | Example 8 | Example 9 | Example 10 | Example 11 | Example 12 | Example 13 | Example 14 |
|---|---|---|---|---|---|---|---|---|---|
| Copolymer (A-1) | | Parts by mass | | | | | | | |
| Copolymer (A-2) | | Parts by mass | | | | | | | |
| Copolymer (A-3) | | Parts by mass | | | | | | | |
| Copolymer (A-4) | | Parts by mass | | | | | | | |
| Copolymer (A-5) | | Parts by mass | | | | | | | |

(continued)

| | | Unit | Example 8 | Example 9 | Example 10 | Example 11 | Example 12 | Example 13 | Example 14 |
|---|---|---|---|---|---|---|---|---|---|
| Copolymer (A-6) | | Parts by mass | | | | | | | |
| Copolymer (A-7) | | Parts by mass | 10 | 12 | | | | | |
| Copolymer (A-8) | | Parts by mass | | | 8 | 10 | 12 | | |
| Copolymer (A-9) | | Parts by mass | | | | | | 8 | 10 |
| Copolymer (A-10) | | Parts by mass | | | | | | | |
| Copolymer (A-11) | | Parts by mass | | | | | | | |
| Copolymer (A'-1) | | Parts by mass | | | | | | | |
| Polyamide resin (B-1) | | Parts by mass | 90 | 88 | 92 | 90 | 88 | 92 | 90 |
| Polyamide resin (B-2) | | Parts by mass | | | | | | | |
| Charpy impact strength | 23°C (with a notch) | kJ/m$^2$ | 11.3 | 12.8 | 9.0 | 12.0 | 12.7 | 9.2 | 12.1 |
| | -40°C (with a notch) | kJ/m$^2$ | 7.5 | 8.6 | 6.4 | 6.9 | 8.7 | 5.8 | 7.1 |
| Flowability | Spiral flow length | cm | 75.0 | 73.0 | 76.0 | 74.0 | 72.0 | 74.0 | 73.0 |

[Table 4]

Table 4

| | | Unit | Example 15 | Example 16 | Example 17 | Example 18 | Example 19 | Example 20 | Example 21 |
|---|---|---|---|---|---|---|---|---|---|
| Copolymer (A-1) | | Parts by mass | | | | | | | |

(continued)

| | | Unit | Example 15 | Example 16 | Example 17 | Example 18 | Example 19 | Example 20 | Example 21 |
|---|---|---|---|---|---|---|---|---|---|
| Copolymer (A-2) | | Parts by mass | | | | | | | |
| Copolymer (A-3) | | Parts by mass | | | | | | | |
| Copolymer (A-4) | | Parts by mass | | | | | | | |
| Copolymer (A-5) | | Parts by mass | | | | | | | |
| Copolymer (A-6) | | Parts by mass | | | | | | | |
| Copolymer (A-7) | | Parts by mass | | | | 8 | 10 | 12 | |
| Copolymer (A-8) | | Parts by mass | | | | | | | 8 |
| Copolymer (A-9) | | Parts by mass | 12 | | | | | | |
| Copolymer (A-10) | | Parts by mass | | 10 | | | | | |
| Copolymer (A-11) | | Parts by mass | | | 10 | | | | |
| Copolymer (A'-1) | | Parts by mass | | | | | | | |
| Polyamide resin (B-1) | | Parts by mass | 88 | 90 | 90 | | | | |
| Polyamide resin (B-2) | | Parts by mass | | | | 92 | 90 | 88 | 92 |
| Charpy impact strength | 23°C (with a notch) | kJ/m$^2$ | 13.4 | 12.7 | 9.7 | 11.2 | 13.4 | 14.9 | 11.7 |
| | -40°C (with a notch) | kJ/m$^2$ | 8.6 | 7.9 | 6.8 | 6.1 | 8.5 | 9.9 | 6.4 |

(continued)

| | | Unit | Example 15 | Example 16 | Example 17 | Example 18 | Example 19 | Example 20 | Example 21 |
|---|---|---|---|---|---|---|---|---|---|
| Flowability | Spiral flow length | cm | 71.0 | 72.0 | 72.0 | 72.0 | 70.0 | 68.0 | 72.0 |

Table 4 (continued)

| | Unit | Example 22 | Example 23 | Example 24 | Example 25 | Example 26 | Example 27 | Example 28 |
|---|---|---|---|---|---|---|---|---|
| Copolymer (A-1) | Parts by mass | | | | | | | |
| Copolymer (A-2) | Parts by mass | | | | | | | |
| Copolymer (A-3) | Parts by mass | | | | | | | |
| Copolymer (A-4) | Parts by mass | | | | | | | |
| Copolymer (A-5) | Parts by mass | | | | | | | |
| Copolymer (A-6) | Parts by mass | | | | | | | |
| Copolymer (A-7) | Parts by mass | | | | | | | |
| Copolymer (A-8) | Parts by mass | 10 | 12 | | | | | |
| Copolymer (A-9) | Parts by mass | | | 8 | 10 | 12 | | |
| Copolymer (A-10) | Parts by mass | | | | | | 10 | |
| Copolymer (A-11) | Parts by mass | | | | | | | 10 |
| Copolymer (A'-1) | Parts by mass | | | | | | | |
| Polyamide resin (B-1) | Parts by mass | | | | | | | |

(continued)

| | | Unit | Example 22 | Example 23 | Example 24 | Example 25 | Example 26 | Example 27 | Example 28 |
|---|---|---|---|---|---|---|---|---|---|
| Polyamide resin (B-2) | | Parts by mass | 90 | 88 | 92 | 90 | 88 | 90 | 90 |
| Charpy impact strength | 23°C (with a notch) | kJ/m$^2$ | 13.1 | 15.3 | 11.6 | 13.0 | 15.1 | 14.1 | 11.4 |
| | -40°C (with a notch) | kJ/m$^2$ | 6.9 | 8.7 | 5.8 | 7.1 | 8.6 | 7.9 | 6.8 |
| Flowability | Spiral flow length | cm | 71.0 | 69.0 | 71.0 | 70.0 | 68.0 | 69.0 | 68.0 |

[Table 5]

Table 5

| | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Copolymer (A-1) | Parts by mass | | | | | | | |
| Copolymer (A-2) | Parts by mass | | | | | | | |
| Copolymer (A-3) | Parts by mass | | | | | | | |
| Copolymer (A-4) | Parts by mass | | | | | | | |
| Copolymer (A-5) | Parts by mass | | | | | | | |
| Copolymer (A-6) | Parts by mass | | | | | | | |
| Copolymer (A-7) | Parts by mass | | | | | | | |
| Copolymer (A-8) | Parts by mass | | | | | | | |
| Copolymer (A-9) | Parts by mass | | | | | | | |
| Copolymer (A-10) | Parts by mass | | | | | | | |
| Copolymer (A-11) | Parts by mass | | | | | | | |
| Copolymer (A'-1) | Parts by mass | | 10 | 8 | 12 | 8 | 10 | 12 |
| Polyamide resin (B-1) | Parts by mass | 100 | 90 | 92 | 88 | | | |
| Polyamide resin (B-2) | Parts by mass | | | | | 92 | 90 | 88 |

(continued)

| | | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Charpy impact strength | 23°C (with a notch) | kJ/m$^2$ | 4.9 | 8.0 | 6.0 | 8.6 | 7.8 | 10.1 | 11.9 |
| | -40°C (with a notch) | kJ/m$^2$ | 2.7 | 6.3 | 4.7 | 6.8 | 5.4 | 6.3 | 7.3 |
| Flowability | Spiral flow length | cm | 76.0 | 71.0 | 72.0 | 69.0 | 67.0 | 65.0 | 62.0 |

**Claims**

1. A graft-modified ethylene/1-butene copolymer (A), obtained by graft-modifying an ethylene/1-butene copolymer (a) with a polar compound,

   wherein the ethylene/1-butene copolymer (a) satisfies the following requirements (a-i) and (a-ii):

   requirement (a-i): a ratio ($MFR_{10}/MFR_{2.16}$) of a melt flow rate ($MFR_{10}$) measured under conditions of 190°C and a load of 10 kg in accordance with ASTM D1238 to a melt flow rate ($MFR_{2.16}$) measured under conditions of 190°C and a load of 2.16 kg in accordance with ASTM D1238 is in the range of 6.7 to 9.0; and

   requirement (a-ii): a vinyl group content is in the range of 5.0 to 20.0 groups and a total amount of unsaturated bonds is in the range of 40.0 to 200.0 bonds, per 100,000 carbon atoms as calculated by $^{1}$H-NMR.

2. The graft-modified ethylene/1-butene copolymer (A) according to claim 1, wherein the polar compound is at least one selected from the group consisting of a hydroxyl group-containing ethylenically unsaturated compound, an amino group-containing ethylenically unsaturated compound, an epoxy group-containing ethylenically unsaturated compound, an aromatic vinyl compound, unsaturated carboxylic acid and a derivative thereof, a vinyl ester compound, and vinyl chloride.

3. A graft-modified ethylene/1-butene copolymer (A), obtained by graft-modifying an ethylene/1-butene copolymer (a) with a polar compound,

   wherein the graft-modified ethylene/1-butene copolymer (A) satisfies the following requirements (A-i) to (A-v):

   requirement (A-i): a ratio ($MFR_{10}/MFR_{2.16}$) of a melt flow rate ($MFR_{10}$) measured under conditions of 190°C and a load of 10 kg in accordance with ASTM D1238 to a melt flow rate ($MFR_{2.16}$) measured under conditions of 190°C and a load of 2.16 kg in accordance with ASTM D1238 is in the range of 11.5 to 18.0;

   requirement (A-ii): a vinyl group content is in the range of 5.0 to 20.0 groups, and a total amount of unsaturated bonds is in the range of 40.0 to 200.0 bonds, per 100,000 carbon atoms as calculated by $^{1}$H-NMR;

   requirement (A-iii): an amount of graft modification is in the range of 0.1 to 2.0% by mass based on 100% by mass of the graft-modified ethylene/1-butene copolymer (A);

   requirement (A-iv): a melt flow rate ($MFR_{2.16}$) measured in accordance with ASTM D1238 under conditions of 190°C and a load of 2.16 kg, is in the range of 0.01 to 5.00 g/10 min; and

   requirement (A-v): a density measured in accordance with ASTM D1505 under condition of 25°C, is in the range of 850 to 885 kg/m$^{3}$.

4. The graft-modified ethylene/1-butene copolymer (A) according to claim 3, wherein the polar compound is at least one selected from the group consisting of unsaturated carboxylic acid and a derivative thereof.

5. A polyamide resin composition comprising 1 to 50 parts by mass of the graft-modified ethylene/1-butene copolymer (A) according to any one of claims 1 to 4 and 50 to 99 parts by mass of a polyamide resin (B), based on 100 parts by mass of a total of the graft-modified ethylene/1-butene copolymer (A) and the polyamide resin (B).

6. The polyamide resin composition according to claim 5, wherein the polyamide resin (B) is one or more aliphatic polyamide resins selected from the group consisting of polyamide 6, polyamide 66, polyamide 11, polyamide 12, polyamide 612, polyamide 610 and polyamide 1010.

7. A pellet comprising the polyamide resin composition according to claim 5.

8. A shaped product comprising the polyamide resin composition according to claim 5.

9. An injection molded article comprising the polyamide resin composition according to claim 5.

10. An automotive component comprising the polyamide resin composition according to claim 5.

11. An electronic component comprising the polyamide resin composition according to claim 5.

12. An automotive electrical component comprising the polyamide resin composition according to claim 5.

## INTERNATIONAL SEARCH REPORT

| International application No. |
| --- |
| **PCT/JP2024/008268** |

| A. | CLASSIFICATION OF SUBJECT MATTER |
| --- | --- |

*C08F 255/00*(2006.01)i; *C08F 8/46*(2006.01)i; *C08L 23/26*(2006.01)i; *C08L 51/06*(2006.01)i; *C08L 77/00*(2006.01)i
FI: C08F255/00; C08L23/26; C08L77/00; C08L51/06; C08F8/46

According to International Patent Classification (IPC) or to both national classification and IPC

| B. | FIELDS SEARCHED |
| --- | --- |

Minimum documentation searched (classification system followed by classification symbols)

C08F255/00; C08F8/46; C08L23/26; C08L51/06; C08L77/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2004-210853 A (MITSUI CHEMICALS, INC.) 29 July 2004 (2004-07-29) | 1-12 |
| A | JP 2004-210851 A (MITSUI CHEMICALS, INC.) 29 July 2004 (2004-07-29) | 1-12 |
| A | WO 2022/209138 A1 (MITSUI CHEMICALS, INC.) 06 October 2022 (2022-10-06) | 1-12 |
| A | JP 2022-142958 A (MITSUI CHEMICALS, INC.) 03 October 2022 (2022-10-03) | 1-12 |
| A | WO 2021/085225 A1 (MITSUI CHEMICALS, INC.) 06 May 2021 (2021-05-06) | 1-12 |
| A | JP 2020-164661 A (MITSUI CHEMICALS, INC.) 08 October 2020 (2020-10-08) | 1-12 |
| A | JP 9-104815 A (MITSUI SEKIYU KAGAKU KOGYO K.K.) 22 April 1997 (1997-04-22) | 1-12 |
| A | WO 2022/239729 A1 (MITSUBISHI CHEMICAL CORPORATION) 17 November 2022 (2022-11-17) | 1-12 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **09 May 2024** | **21 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/008268**

| Patent document cited in search report | | | Publication date (day/month/year) | Patent family member(s) | | | Publication date (day/month/year) |
|---|---|---|---|---|---|---|---|
| JP | 2004-210853 | A | 29 July 2004 | (Family: none) | | | |
| JP | 2004-210851 | A | 29 July 2004 | (Family: none) | | | |
| WO | 2022/209138 | A1 | 06 October 2022 | EP | 4317202 | A1 | |
| | | | | CN | 116867812 | A | |
| JP | 2022-142958 | A | 03 October 2022 | (Family: none) | | | |
| WO | 2021/085225 | A1 | 06 May 2021 | US | 2022/0372260 | A1 | |
| | | | | EP | 4053210 | A1 | |
| | | | | KR | 10-2022-0042391 | A | |
| | | | | CN | 114364733 | A | |
| | | | | BR | 112022007685 | A | |
| | | | | CN | 117126483 | A | |
| | | | | TW | 202124468 | A | |
| JP | 2020-164661 | A | 08 October 2020 | (Family: none) | | | |
| JP | 9-104815 | A | 22 April 1997 | (Family: none) | | | |
| WO | 2022/239729 | A1 | 17 November 2022 | (Family: none) | | | |

Form PCT/ISA/210 (patent family annex) (July 2022)

**EP 4 682 182 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5032886 A
- JP 2021503022 A
- JP 2022142958 A